# EUROPEAN PATENT SPECIFICATION

(11) **EP 4 415 109 B1**
(45) Date of publication and mention of the grant of the patent: **08.04.2026**
(21) Application number: 23215222.3
(22) Date of filing: 08.12.2023
(51) Int. Cl.: H01M 10/44, H01M 50/15, H01M 50/30, H01M 50/557, H01M 50/578, H01M 50/593

(54) **ENERGY STORAGE APPARATUS AND ELECTRIC DEVICE**
ENERGIESPEICHERVORRICHTUNG UND ELEKTRISCHE VORRICHTUNG
APPAREIL DE STOCKAGE D'ÉNERGIE ET DISPOSITIF ÉLECTRIQUE

(30) Priority: 09.02.2023 CN 202310091049
(43) Date of publication of application: 14.08.2024
(73) Proprietor: Hithium Tech HK Limited, Hong Kong (HK)
(72) Inventor: XU, Weidong, Shenzhen, Guangdong, 518000 (CN); XIONG, Yongfeng, Shenzhen, Guangdong, 518000 (CN); CHEN, Jinqiang, Shenzhen, Guangdong, 518000 (CN)
(74) Representative: Manitz Finsterwald Patent- und Rechtsanwaltspartnerschaft mbB

(56) References cited:
- CN-U- 208 127 255
- US-A1- 2015 037 620

## Description

### FIELD

The present disclosure relates to the field of energy storage technology, and in particularly, to an energy storage apparatus and an electric device.

### BACKGROUND

An energy storage apparatus is used to store energy and release it as desired. The current energy storage apparatus is mainly a rechargeable secondary battery such as a lithium battery or a nano-battery. Currently, a common secondary battery mainly includes a housing, an electrode assembly, and a cover plate assembly. The electrode assembly is accommodated in an accommodation cavity of the housing. The cover plate assembly closes the housing. A tab of the electrode assembly is electrically connected to a pole on the cover plate assembly through a connector.

During assembling of the secondary battery, it is prone to an intrusion of foreign matter into the cover plate assembly to cause a short circuit, thereby posing safety hazards. US2015/0037620A1 describes an electric power storage system that is capable of obtaining superior battery characteristics.

### SUMMARY

An object of the present disclosure is to provide an energy storage apparatus and an electric device, which solve a safety problem arising from falling of welding slag.

In order to achieve the purpose of the present disclosure, the present disclosure provides the following technical solutions. In a first aspect, embodiments of the present disclosure provide an energy storage apparatus. The energy storage apparatus includes a support, a pole, a stimulus-response member, and a first insulation member. The support has a first side and a second side facing away from the first side. The support has a mounting hole and a vent hole. The mounting hole and the vent hole are spaced apart from each other in a length direction of the support. The pole is accommodated in the mounting hole. The stimulus-response member is arranged at the second side, and a gas from the first side flows to the stimulus-response member through the vent hole. The connector is located at the first side, and includes a first connection portion and a second connection portion connected to the first connection portion. The first connection portion faces towards the second connection portion after the first connection portion and the second connection portion are folded relative to each other. The first connection portion is connected to the pole. The second connection portion is configured to be connected to a tab of the energy storage apparatus. The first insulation member is attached to the first connection portion, and extends towards the vent hole. The vent hole is partially covered with the first insulation member in a thickness direction of the support.

The first insulation member is attached to the first connection portion and extends towards the vent hole. The vent hole is partially covered with the first insulation member in the thickness direction of the support. In addition, the vent hole is at least partially uncovered with the first insulation member. In this way, welding slag generated during welding of the first connection portion and the pole and welding slag generated during welding of the second connection portion and the tab can be covered with the first insulation member and cannot fall onto the stimulus-response member through the vent hole, while ensuring that air circulation at the vent hole can be achieved to ensure normal operation of the stimulus-response member. As a result, it is possible to avoids a short circuit between the stimulus-response member and the pole. Meanwhile, the welding slag generated during the welding of the first connection portion and the pole is also blocked by the first insulation member without falling into a cell, which avoids a short circuit inside the cell, thereby improving safety and lowering safety hazards.

In an implementation, in the thickness direction of the support, a ratio of an area of a part of the vent hole uncovered with the first insulation member to an area of a part of the vent hole covered with the first insulation member ranges from 1/10 to 1/2. By setting this proportional range, the vent hole and the first insulation member are reasonable in size, allowing for a harmonious structural proportion of the energy storage apparatus. Simultaneously, it is possible to ensure that the first insulation member has a large size to act as a barrier against the welding slag. Meanwhile, it can be ensured that the gas can pass through the vent hole and reach below the stimulus-response member.

In an implementation, a side wall of the vent hole includes a first end portion and a second end portion opposite to the first end portion in the length direction of the support. The first end portion is close to the mounting hole and covered with the first insulation member in the thickness direction of the support, and the second end portion is uncovered with the first insulation member in the thickness direction of the support. By providing the first insulation member to cover the first end portion and allowing the first insulation member to extend towards the second end portion, the vent hole can be at least partially covered to achieve a function of protecting from the welding slag. Meanwhile, a spacing is formed between the first insulation member and the second end portion in the length direction of the support. That is, the first insulation member does not extend to the second end portion, i.e., a gap is formed between the first insulation member and a side wall of the vent hole corresponding to the second end portion, thereby allowing the gas to enter the vent hole and the stimulus-response member at the second side through the gap.

In an implementation, a side wall of the vent hole includes a third end portion and a fourth end portion opposite to the third end portion in a width direction of the support. The third end portion is covered with the first insulation member in the thickness direction of the support and the fourth end portion is uncovered with the first insulation member in the thickness direction of the support; or both the third end portion and the fourth end portion are uncovered with the first insulation member in the thickness direction of the support. A gap is formed between the first insulation member and the side wall of the vent hole in a width direction of first insulation member, allowing the gas also to flow from the gap into the vent hole and further to the stimulus-response member. As a result, a smoother gas flow is provided.

In an implementation, the first insulation member is attached to a surface of a first side of the support. In this way, it is possible to prevent the first insulation member from be formed into a cantilever structure and to avoid a movement of a cantilever part of the first insulation member due to blowing of the gas from causing a flutter of the first insulation member, thereby leading to failure of a coverage effect of the first insulation member.

In an implementation, a side wall of the vent hole is connected to a grating dividing the vent hole into a plurality of air holes. The first insulation member is also attached to the grating. The first insulation member is attached to the grating. For example, the first insulation member may be adhered and fixed to the grating. As a result, the first insulation member has a stable structure without being fluttered by the blowing of gas, thereby ensuring a stable blocking effect against welding slag.

In an implementation, the first connection portion has a first surface and a second surface facing away from the first surface. The first surface faces towards the second connection portion after the first connection portion and the second connection portion are folded. The first insulation member is attached to the first surface, and the second surface is connected to the pole. By attaching the first insulation member to the first surface, a normal connection between the second surface and the pole is unaffected, thus ensuring a normal electrical connection between the second surface and the pole. Most of welding slag generated during the welding of the second surface to the pole is adhered and fixed by a surface of a side of the first insulation member towards the pole without several jumping. In this way, falling of the welding slag into the vent hole and entry of the welding slag into the stimulus-response member can be avoided from resulting in a short circuit. In addition, falling of the welding slag into the cell can also be avoided from resulting in a short circuit. In addition, the welding slag generated during the welding between the second connection portion and the tab is adhered and fixed by a surface of a side of the first insulation member facing away from the pole without several jumping, which can prevent the welding slag from falling into the vent hole and entering the stimulus-response member, which in turn avoids the falling of the welding slag into the cell.

In an implementation, the energy storage apparatus further includes a second insulation member attached to the second connection portion. The vent hole is at least partially covered with the second insulation member in the thickness direction of the support. By providing the second insulation member to cover the vent hole at least partially in the thickness direction of the support, the blocking effect on the welding slag is further strengthened, which further improves the safety of the energy storage apparatus and lowers safety hazards.

In an implementation, the second connection portion has a third surface. The third surface faces towards the first connection portion after the first connection portion and the second connection portion are folded. The second insulation member is attached to the third surface. The second insulation member is attached to the third surface, which does not affect a normal connection between the second connection portion and the tab, thereby ensuring a normal electrical connection between the second connection portion and the tab. The welding slag generated when welding the second connection portion to the tab is adhered and fixed to a surface of a side of the second insulation member facing towards the cell without several jumping, which prevents the falling of the welding slag to the vent hole, thereby avoiding the short circuit of the stimulus-response member. A part, which is not adhered and fixed by the first insulation member, of the welding slag generated when welding the first connection portion and the pole falls to a surface of the second insulation member facing away from the cell to be adhered and fixed. Therefore, it is possible to prevent the welding slag from falling into the vent hole and entering the stimulus-response member. In addition, the welding slag is also prevented from falling into the cell.

In an implementation, the support includes a substrate, a first stopper, and a second stopper. The first stopper and the second stopper are arranged at one surface of the substrate and are opposite to each other in a length direction of the substrate. The substrate, the first stopper, and the second stopper form an accommodation groove together. The mounting hole and the vent hole are both defined at the substrate. The first insulation member and the second insulation member are both accommodated in the accommodation groove after the first connection portion and the second connection portion are folded. The first stopper and the second stopper are configured to limit movements of the first insulation member and the second insulation member in the length direction of the support. By providing the first stopper and the second stopper, and by forming the accommodation groove by the first stopper, the second stopper, and the substrate together, the first insulation member and the second insulation member can be accommodated into the accommodation groove, limiting the first insulation member and the second insulation member in the length direction of the substrate. In this way, it is possible to prevent movements of the first insulation member and/or the second insulation member in the length direction of the substrate from completely covering the vent hole, which causes the gas not to enter the stimulus-response member through the vent hole, resulting in a loss of an overcharge protection function. It is also possible to avoid other problems caused by an inability of the gas to flow normally, which is caused by movements of the first insulation member and/or the second insulation member in the length direction of the substrate to other positions, such as a problem that an explosion-proof valve cannot be started or a problem that a stimulus-response sheet cannot be normally rotated.

In an implementation, the support further includes a third stopper and a fourth stopper that are arranged at a surface of the substrate at which the first stopper is located. The third stopper and the fourth stopper are opposite to each other in a width direction of the substrate. The accommodation groove is surrounded by the third stopper and the fourth stopper. The third stopper and the fourth stopper are configured to limit movements of the first insulation member and the second insulation member in a width direction of the support. By providing the third stopper and the fourth stopper, positions of the first insulation member and the second insulation member are limited in the width direction of the substrate, thereby avoiding abnormality of gas flow caused by movements of the first insulation member and/or the second insulation member in the width direction of the substrate.

In an implementation, in the thickness direction of the support, a ratio of an area of a part of the vent hole uncovered with the second insulation member to an area of a part of the vent hole covered with the second insulation member ranges from 1/10 to 1/2. By setting this proportional range, the vent hole and the second insulation member are reasonable in size, allowing for the harmonious structural proportion of the energy storage apparatus. Meanwhile, it is possible to ensure that the second insulation member has a large size to block the welding slag. Meanwhile, it is possible to ensure that the gas can pass through the vent hole and reach below the stimulus-response member. In an exemplary embodiment, all the vent holes are completely covered with the second insulation member in the thickness direction of the support. In addition, a gap is formed between the second insulation member and the support in the thickness direction of the support. In this way, the blocking effect on the welding slag is good. In addition, the gas can flow to the gap between the side wall of the vent hole and the first insulation member to enter the vent hole through the gap between the second insulation member and the support in the thickness direction of the support, and then flow to the stimulus-response member.

In an implementation, the first insulation member has a first visual recognition feature, and the second insulation member has a second visual recognition feature different from the first visual recognition feature. By providing the first insulation member with the first visual recognition feature and providing the second insulation member with the second visual recognition feature different from the first visual recognition feature, it is convenient to quickly and accurately identify whether a layer of protection structure is missing. That is, it is possible to identify whether the first insulation member and the second insulation member are provided simultaneously to ensure the protection effect of blocking the welding slag.

In a second aspect, embodiments of the present disclosure also provide an electric device. The electric device includes the energy storage apparatus according to any one of various implementations of the first aspect. The energy storage apparatus is configured to supply electric energy to the electric device. By using the energy storage apparatus according to the embodiments of the present disclosure, the safety hazards due to the short circuit can be reduced, and the safety is improved.

### BRIEF DESCRIPTION OF THE DRAWINGS

In order to clearly explain technical solutions according to the implementations of the present disclosure or the technical solutions in the related art, drawings used in the description of the implementations or the related art are briefly described below. Obviously, the drawings described below are merely some implementations of the present disclosure. Based on these drawings, other drawings can be obtained by those skilled in the art without creative effort.
FIG. 1 is an isometric view of an energy storage apparatus according to an embodiment.
FIG. 2 is an exploded view of an energy storage apparatus according to an embodiment.
FIG. 3 is a partial exploded view of an energy storage apparatus according to an embodiment.
FIG. 4 is an isometric view of a negative electrode connector, a first insulation member, and a second insulation member according to an embodiment.
FIG. 5 is an exploded view of FIG. 4.
FIG. 6 is a partial cross-sectional view of an energy storage apparatus according to an embodiment.
FIG. 7 is a partial isometric view of an energy storage apparatus according to an embodiment.
FIG. 8 is a partial plan view of an energy storage apparatus according to an embodiment.

### Descriptions of Reference Numerals:

100-energy storage apparatus, 10-cover plate assembly, 20-cell, 21-positive tab, 22-negative tab, 30-housing;
11-support, 111-first side, 112-second side, 113-mounting hole, 114-vent hole, 115-substrate, 116-first stopper, 117-second stopper, 118-third stopper, 119-fourth stopper, 101-first end portion, 102-second end portion, 103-third end portion, 104-fourth end portion, 105-accommodation groove, 106-grating; 12-negative pole, 121-pole body, 122-connection flange, 123-seal ring; 13- stimulus-response member, 14-negative connector, 141-first connection portion, 142-second connection portion, 143-first surface, 144-second surface, 145-third surface, 146-fourth surface, 15-first insulation member, 16-second insulation member, 17-positive connector, 18-positive pole, 19-light aluminum sheet, 191-explosion-proof valve.

### DETAILED DESCRIPTION

Technical solutions according to implementations of the present disclosure will be described clearly and completely below in combination with accompanying drawings of the implementations of the present disclosure. Obviously, the implementations described below are only a part of the implementations of the present disclosure, rather than all implementations of the present disclosure. On a basis of the implementations of the present disclosure, all other embodiments obtained by those skilled in the art without creative labor shall fall within the protection scope of the present disclosure.

It should be noted that when the component is referred to as being "fixed to" another component, it may either be directly on the other component or exist with an intermediate component in between. When one component is considered to be "connected to" another component, it may either be directly connected to the other component or coexist with an intermediate component simultaneously.

Unless otherwise defined, all technical and scientific terms used in the present disclosure have the same meaning as commonly understood by those skilled in the art of the present disclosure. Terms in the specification of the present disclosure herein are only used for purpose of describing specific embodiments rather than intended to limit the present disclosure. The term "and/or" as used in the present disclosure includes any and all combinations of one or more related listed items.

Some implementations of the present disclosure are described in detail below with reference to the accompanying drawings. Embodiments of the present disclosure and features disclosed in the embodiments of the present disclosure can be combined with each other without conflicting.

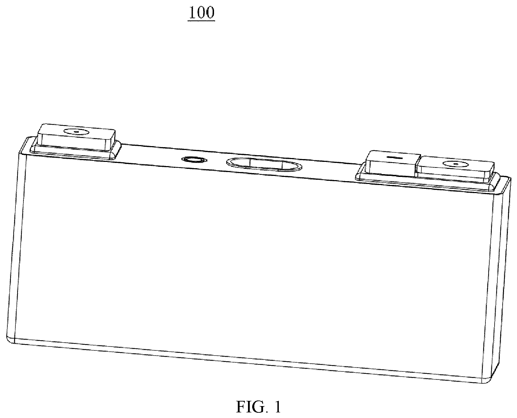

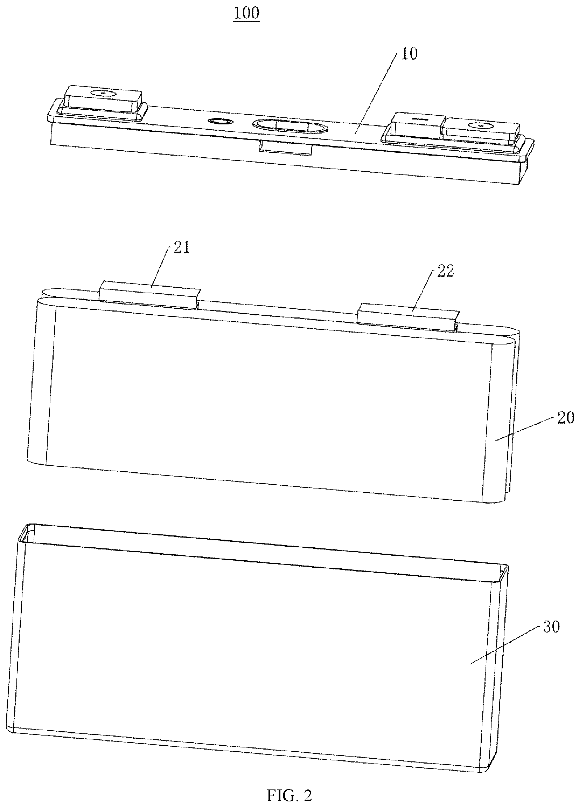

Referring to FIG. 1 and FIG. 2, an embodiment of the present disclosure provides an energy storage apparatus 100. The energy storage apparatus 100 includes a housing 30, an electrode assembly, a cover plate assembly, and a connector.

The electrode assembly is accommodated in the housing 30. The cover plate assembly 10 covers an opening of the housing 30 and closes the housing 30.

The electrode assembly includes a cell 20, a positive tab 21, and a negative tab 22. The cell 20 includes a stacked positive electrode plate (not shown), a separator (not shown), and a negative electrode plate (not shown). The positive tab 21 is connected to the positive electrode plate, and the negative tab 22 is connected to the negative electrode plate.

Referring to FIG. 2, FIG. 3, and FIG. 7, the cover plate assembly 10 includes a support 11, a pole, a stimulus-response member 13, and the like.

A structures of a positive electrode side is substantially the same as that of a negative electrode side. It should be noted that the stimulus-response member 13 is arranged at the positive electrode side or the negative electrode side, and hardly arranged at both the positive electrode side and the negative electrode side simultaneously. The structure at the negative electrode side is described below with the stimulus-response member 13 arranged at the negative electrode side. It should be understood that when the stimulus-response member 13 is arranged at the positive electrode side, the structure of the positive electrode side may refer to a structure of the stimulus-response member 13 arranged at the negative electrode side. The support 11 is made of an insulating material, and may be made of a plastic material such as a PP (polypropylene) material in some embodiments. The support 11 has a first side 111 and a second side 112 facing away from the first side 111. The first side 111 faces towards the cell 20. The second side 112 faces away from the cell 20. The support 11 is generally of a plate shape having a generally rectangular plate surface. The support 11 has a length, a width, and a thickness. When various structures are subsequently described, an extending direction along the length of the support 11 refers to a length direction, an extending direction along the width of the support 11 refers to a width direction, and an extending direction along the thickness of the support 11 refers to a thickness direction.

The support 11 has a mounting hole 113 and a vent hole 114 spaced apart from each other. The mounting hole 113 and the vent hole 114 are spaced apart from each other in a length direction of the support 11. Both the mounting hole 113 and the vent hole 114 are through holes penetrates the support 11 in the thickness direction of the support 11 and may be circular holes. In an exemplary embodiment, the mounting hole 113 and the vent hole 114 may also be non-circular holes, such as elliptical holes and polygonal holes, and the present disclosure is not limited in this regard. A connection line between geometric centers of the mounting hole 113 and the vent hole 114 may be parallel to the length direction of the support 11 or slightly inclined relative to the length direction of the support 11 at a predetermined angle.

The pole is made of a metal material. The pole includes a positive pole 18 and a negative pole 12. For example, the positive pole 18 is made of aluminum, and the negative pole 12 is made of copper or a copper-aluminum composite material. The positive pole 18 is electrically connected to the positive tab 21 of the cell 20, and the negative pole 12 is electrically connected to the negative tab 22 of the cell 20.

By taking the negative pole 12 as an example, the negative pole 12 is accommodated in the mounting hole 113. Further, the negative pole 12 extends from the first side 111 into the mounting hole 113 and then extends to the second side 112 out of the mounting hole 113.

In an exemplary embodiment, the negative pole 12 includes a pole body 121 and a connection flange 122. The pole body 121 is connected to a middle of the connection flange 122. Further, the pole body 121 extends into the mounting hole 113 and then extends out of the the mounting hole 113 to the second side 112. The connection flange 122 is located at the first side 111. An outer peripheral wall of the pole body 121 may be in contact with an inner wall of the mounting hole 113. A size of the connection flange 122 is greater than a size of the pole body 121. The connection flange 122 may be attached to a surface of the first side 111 of the support 11 and functions to limit the pole body 121 to further extend from the second side 112. After the negative pole 12 is accommodated in the mounting hole 113, the mounting hole 113 is closed, allowing the gas not to leak from the mounting hole 113, thereby ensuring airtightness of an internal space of the energy storage apparatus 100.

In an exemplary embodiment, a seal ring 123 may be provided at an outer peripheral surface of the negative pole 12 and/or the inner wall of the mounting hole 113. Sealing of the negative pole 12 and the mounting hole 113 is achieved by the seal ring 123.

A structure of the positive pole 18 is substantially the same as that of the negative pole 12, and a corresponding mounting hole may also be defined at a position on the support 11 corresponding to the positive pole 18, and the description thereof in detail will be omitted herein.

The stimulus-response member 13 is arranged at the second side 112. A gas from the first side 111 flows to the stimulus-response member 13 through the vent hole 114. By configuring the stimulus-response member 13 to be stimulus-response-deformed in response to an increase in a pressure within the energy storage apparatus 100, when the gas in the energy storage device 100 exceeds a predetermined pressure threshold, the stimulus-response member 13 can be stimulus-response-deformed to be in contact with a metal conductive pressing block, allowing an external short-circuit to occur on a positive electrode assembly. Then, since a large short-circuit current may result in fusing and topping between the stimulus-response member 13 and a bottom of the metal conductive pressing block to restore the stimulus-response circuit 13 to an open circuit state, it is possible to prevent the energy storage apparatus 100 from being overcharged. Therefore, explosion of the energy storage apparatus 100 can be avoided.

In some embodiment, the cover plate assembly 10 further includes a light aluminum sheet 19 arranged at the second side 112 of the support 11. The light aluminum sheet 19 is connected to the support 11. The light aluminum sheet 19 and the support 11 together form a cavity in communication with the vent hole 114. The stimulus-response member 13 is arranged at the light aluminum sheet 19. When the internal gas pressure of the energy storage apparatus 100 exceeds a threshold value due to overcharging of the cell 20, the gas flows through the vent hole 114 and reaches below the stimulus-response member 13 at the second side 112 (i.e., a side of the stimulus-response member 13 facing towards the negative connector 14), thereby rotating the stimulus-response member 13. After the rotation, the stimulus-response member 13 allows for an electrical connection between the negative pole 12 and the positive pole 18. In this case, the energy storage apparatus 100 is in a short-circuit state where a charging current directly flows through the positive pole 18 to the negative pole 12, rather than further flowing to the cell 20. Thus, it is possible to achieve an overcharge protection effect, thereby improving charging safety of the cell 20. When the cell 20 is normally charged without overcharging, the stimulus-response member 13 is not rotated. In this way, the positive pole 18 is not electrically connected to the negative pole 12, thereby ensuring normal charging and use of the energy storage apparatus 100.

The stimulus-response member 13 is made of a metal conductive material and may have a foldable film layer, a rib structure, and the like. The present disclosure does not limit the specific structure of the stimulus-response member 13, and any applicable structure is conceivable.

Other structures may also be provided on the light aluminum sheet 19, such as a terminal connected to the positive pole 18 and the negative pole 12 and an explosion-proof valve 191, which are not limited. Reference can be made to the related art.

The connector includes a positive connector 17 and a negative connector 14. The positive connector 17 is connected to the positive pole 18 and the positive tab 21. The negative connector 14 is connected to the negative pole 12 and the negative tab 22. The positive connector 17 and the negative connector 14 are both made of a metal material. For example, the positive connector 17 is made of aluminum, and the negative connector 14 is made of copper or a copper aluminum alloy. The following explanation is provided by taking the negative connector 14 as an example, and the positive connector 17 may be referenced.

The negative connector 14 is located at the first side 111. The negative connector 14 includes a first connection portion 141 and a second connection portion 142. The first connection portion 141 is connected to the second connection portion 142 in a foldable manner. The first connection portion 141 faces towards the second connection portion 142 after the first connection portion 141 and the second connection portion 142 are folded relative to each other.

The first connection portion 141 is connected and fixed to the negative pole 12 in a connection manner such as welding, for example laser welding. The second connection portion 142 is connected and fixed to the negative tab 22 in a connection manner such as welding, for example, ultrasonic welding.

During assembling of the energy storage apparatus 100, the negative connector 14 is initially set to be in an un-rotated and unfolded state. In this case, the cover plate assembly 10 does not close the housing 30 of the energy storage apparatus 100. After the first connection portion 141 is welded and fixed to the negative pole 12 and the second connection portion 142 is welded and fixed to the negative tab 22, the first connection portion 141 and the second connection portion 142 are folded, and other components of the cover plate assembly 10 such as the support 11, the stimulus-response member 13, and the negative pole 12 are rotated synchronously during the rotating until the first connection portion 141 and the second connection portion 142 are in a folded state where they face towards each other. At this time, the cover plate assembly 10 directly faces towards the cell 20. As a result, the cover plate assembly 10 covers the opening of the housing 30 to close the cell 20.

During welding of the first connection portion 141 and the negative pole 12 and welding of the second connection portion 142 and the negative tab 22, welding slag may be generated and may fall from the first side 111 of the support 11 to the stimulus-response member 13 at the second side 112 through the vent hole 114, resulting in a short circuit between the stimulus-response member 13 and the negative pole 12. In some embodiments, the welding slag may drop into the cell 20, resulting in a short circuit.

In order to solve the problem of a short circuit risk generated by the falling of the welding slag, the energy storage apparatus 100 according to the embodiments of the present disclosure also includes a first insulation member 15. The first insulation member 15 is attached to the first connection portion 141 and extends towards the vent hole 114. The vent hole 114 is partially covered with the first insulation member 15 in a thickness direction of the support 11. In addition, the vent hole 114 is at least partially uncovered with the first insulation member 15. In the length direction and/or the width direction of the support 11, a gap is at least partially formed between the side wall of the vent hole 114 and the first insulation member 15. In this way, blockage due to the complete covering of the vent hole 114 with the first insulation member 15 can be avoided, causing the gas from the first side 111 not to flow through the vent hole 114 to reach below the stimulus-response member 13 at the second side 112.

The first insulation member 15 is a separator made of an insulating material such as PET (polyethylene terephthalate) and PPS (polyphenylene sulfide), and the present disclosure is not limited in this regard. In an exemplary embodiment, the first insulation member 15 has an adhesive property. For example, a layer of insulation member may be coated at a surface of the PET to achieve fixing through adhesion between the insulation member and the first connection portion 141.

The first insulation member 15 is made of an insulating material, which can prevent the negative pole 12 from being short-circuited due to the contact of the welding slag with other metal conductive structures wen the welding slag falls on the first insulation member 15.

The vent hole 114 is partially covered with the first insulation member 15 in the thickness direction of the support 11, allowing the welding slag to be blocked by the first insulation member 15 when passing through the vent hole 114. This arrangement has at least three benefits. In a first aspect, the vent hole 114 is also partially ventilated. That is, the vent hole 114 is not completely covered with the first insulation member 15, which allows the gas generated by the cell 20 to still flow to the position below the stimulus-response member 13 at the second side 112 through a gap between an inner wall of the vent hole 114 and the first insulation member 15. Therefore, it is possible to ensure a basic overcharge protection function. In a second aspect, by controlling a size of the gap between the first insulation member 15 and the inner wall of the vent hole 114, welding slag with a size larger than that of the gap cannot fall onto the stimulus-response member 13, and welding slag with a size smaller than that of the gap would be difficult to result in a short circuit even if falling. In this way, the welding slag dropped during the welding of the first connection portion 141 to the negative pole 12 and the welding slag dropped during the welding of the second connection portion 142 to the negative tab 22 will be mostly blocked by the first insulation member 15 and hardly fall to the stimulus-response member 13 at the second side 112 from the gap between the first insulation member 15 and the side wall of the vent hole 114. Therefore, it is possible to avoid the short circuit between the stimulus-response member 13 and the negative pole 12. In a third aspect, the welding slag dropped during the welding of the first connection portion 141 to the negative pole 12 can also be at least partially covered with the first insulation member 15 without falling into the cell 20, thereby avoiding a short circuit inside the cell 20.

It can be understood that the welding of the first connection portion 141 and the negative pole 12 and the welding of the second connection portion 142 and the negative tab 22 are carried out when the negative connector 14 is in an unfolded state. After the welding is completed, the welding slag may be cleaned up, and thus the short circuit due to secondary falling of the welding slag during the rotation of the connector can be avoided.

In an embodiment where the first insulation member 15 has an adhesive property, when the welding slag is generated during the welding, the welding slag may also fall onto the first insulation member 15 and is bonded and fixed, reducing the risk of short circuit caused by falling of the welding slag due to several jumping.

Therefore, in the energy storage apparatus 100 according to the embodiments of the present disclosure, the first insulation member 15 is attached to the first connection portion 141 and extends towards the vent hole 114. The vent hole 114 is partially covered with the first insulation member 15 in the thickness direction of the support 11 and is at least partially uncovered with the first insulation member 15. In this way, the welding slag generated during the welding of the first connection portion 141 and the negative pole 12 and the welding slag generated during the welding of the second connection portion 142 and the negative tab 22 can be covered with the first insulation member 15 and cannot fall onto the stimulus-response member 13 through the vent hole 114, while allowing for air circulation at the vent hole 114 to ensure normal operation of the stimulus-response member 13. Therefore, it is possible to avoid the short circuit between the stimulus-response member 13 and the pole 12. Meanwhile, the welding slag generated during the welding of the first connection portion 141 and the negative pole 12 can also blocked by the first insulation member 15, rather than falling into the cell 20. Therefore, it is possible to avoid the short circuit inside the cell 20, thereby improving safety and lowering safety hazards.

It should be understood that the foregoing descriptions are only provided by using the negative electrode side. When the stimulus-response member 13 is arranged at the positive electrode side, the positive connector 17, the support, or other structures of the positive electrode side may refer to the configuration at the negative electrode side without further elaboration.

In an exemplary embodiment, in the thickness direction of the support 11, a ratio of an area of a part of the vent hole 114 uncovered with the first insulation member 15 to an area of a part of the vent hole 114 covered with the first insulation member 15 ranges from 1/10 to 1/2. In some embodiment, this ratio may be 1/10, 1/9, 1/8, 1/7, 1/6, 1/5, 1/4, 1/3, 1/2, or the like. By setting this proportional range, the vent hole 114 and the first insulation member 15 are allowed to be reasonable in size, allowing for a harmonious structural proportion of the energy storage apparatus 100. Meanwhile, it is possible to ensure that the first insulation member 15 has a large size as a barrier against the welding slag. Meanwhile, it is possible to ensure that the gas can pass through the vent hole 114 and reach below the stimulus-response member 13.

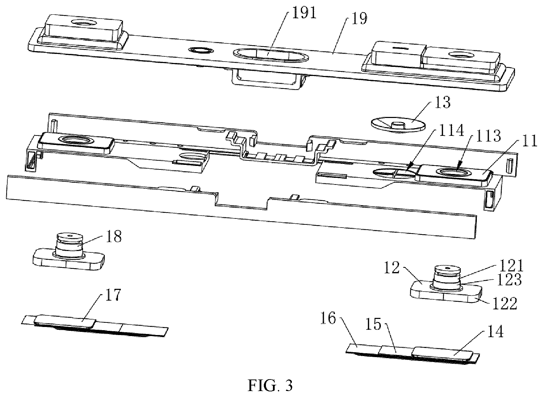

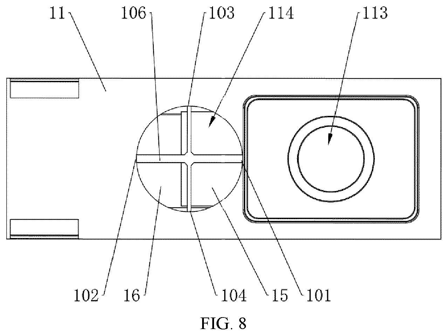

In an embodiment, referring to FIG. 3 and FIG. 8, a side wall of the vent hole 114 includes a first end portion 101 and a second end portion 102 opposite to the first end portion 101 in the length direction of the support 11. The first end portion 101 is close to the mounting hole 113 and covered with the first insulation member 15 in the thickness direction of the support 11, and the second end portion 102 is uncovered with the first insulation member 15 in the thickness direction of the support 11. As a result, a spacing is formed between the first insulation member 15 and the second end portion 102 in the length direction of the support 11.

In some embodiment, the first end portion 101 and the second end portion 102 are each a point at a side wall of the vent hole 114. In an exemplary embodiment, the first end portion 101 is a point where a connection line between a geometric center of the mounting hole 113 and a geometric center of the vent hole 114 intersects with a side wall of the mounting hole 113, and the second end portion 102 is a point where an extending line of a connection line between the geometric center of the mounting hole 113 and the geometric center of the vent hole 114 intersects with a side wall of another side of the side wall of the vent hole 114. A connection line of the first end portion 101, the geometric center of the vent hole 114, and the second end portion 102 is a straight line. In an embodiment where the vent hole 114 is a circular hole, a connection line between the first end portion 101 and the second end portion 102 is a diameter of the vent hole 114.

The first insulation member 15 may be of a rectangular sheet shape. A length direction of the first insulation member 15 may be the same as the length direction of the support 11, a width direction of the first insulation member 15 may be the same as the width direction of the support 11, and a thickness direction of the first insulation member 15 may be the same as the thickness direction of the support 11, which will be described later. It should be understood that a slight deviation may occur in a correspondence between a direction of the first insulation member 15 and a direction of the support 11.

An end of the first insulation member 15 in the length direction of the first insulation member 15 is connected to the first connection portion 141, and the first connection portion 141 is connected to a negative pole 12 at the mounting hole 113, allowing an end of the first insulation member 15 in the length direction of the first insulation member 15 to extend from the first end portion 101 to the second end portion 102. Therefore, by providing the first insulation member 15 to cover the first end portion 101 and to extend towards the second end portion 102, the vent hole 114 may be at least partially covered, achieving the function of welding slag protection. Meanwhile, the second end portion 102 is not covered with the first insulation member 15 in the thickness direction of the support 11, allowing for a spacing between the first insulation member 15 and the second end portion 102 in the length direction of the support 11. That is, the first insulation member 15 does not extend to the second end portion 102, i.e., a spacing is formed between the first insulation member 15 and a side wall of the vent hole 114 at the second end portion 102, thereby allowing the gas to enter the vent hole 114 and the position below the stimulus-response member 13 at the second side 112 through the gap.

It can be understood that a gap between the first insulation member 15 and the second end portion 102 in the length direction of the support 11 can be formed as desired. When the gap is large, the gas can easily pass through the gap. When the gap is small, the blocking effect is excellent, and the welding slag is not prone to falling from the gap to the stimulus-response member 13. The specific size of the gap is not limited in the present disclosure.

In an embodiment, referring to FIG. 3 and FIG. 8, a side wall of the vent hole 114 includes a third end portion 103 and a fourth end portion 104 opposite to the third end portion 103 in a width direction of the support 11. The third end portion 103 is covered with the first insulation member 15 in the thickness direction of the support 11, and the fourth end portion 104 is uncovered with the first insulation member 15 in the thickness direction of the support 11, thereby forming a gap between the first insulation member 15 and the fourth end portion 104 in the width direction of the support 11; or both the third end portion 103 and the fourth end portion 104 are uncovered with the first insulation member 15 in the thickness direction of the support 11, thereby forming a gap between the first insulation member 15 and each of the third end portion 103 and the fourth end portion 104 in the width direction of the support 11.

In some embodiment, the third end portion 103 and the fourth end portion 104 are the same as the first end portion 101 and the second end portion 102, and each is a point on the side wall of the vent hole 114. In an exemplary embodiment, a connection line between the third end portion 103 and the fourth end portion 104 passes through a geometric center point of the vent hole 114. In an exemplary embodiment, the connection line between the third end portion 103 and the fourth end portion 104 is perpendicular to the connection line between the first end portion 101 and the second end portion 102. In an exemplary embodiment, the connection line between the third end portion 103 and the fourth end portion 104 is parallel to the width direction of the support 11.

As described above, an end of the first insulation member 15 in the length direction of the first insulation member 15 extends from the first end portion 101 to the second end portion 102. On this basis, by setting the width of the first insulation member 15, there is a predetermined relationship among two opposite sides of the first insulation member 15 in in the width direction of the first insulation member 15, the third end portion 103, and the fourth end portion 104. Different blocking effects can be obtained by setting this relationship.

In some embodiment, a first relationship is that a spacing is formed between one side of the first insulation member 15 in the width direction of the first insulation member 15 and the third end portion 103. In this way, a gap is formed between the first insulation member 15 and the third end portion 103 in the width direction of the support 11. Meanwhile, another side of the first insulation member 15 in the width direction of the first insulation member 15 extends beyond the fourth end portion 104. In this way, the fourth end portion 104 can be covered with the first insulation member 15 in the thickness direction of the support 11. A second relationship is that a spacing is formed between one side of the first insulation member 15 in the width direction of the first insulation member 15 and the third end portion 103. In this way, a gap is formed between the first insulation member 15 and the third end portion 103 in the width direction of the support 11. Meanwhile, a spacing is formed between the other side of the first insulation member 15 in the width direction of the first insulation member 15 and the fourth end portion 104. In this way, a gap is formed between the first insulation member 15 and the fourth end portion 104 in the width direction of the support 11.

It can be understood that the third end portion 103 and the fourth end portion 104 are exchangeable. That is, in the first relationship, a gap may be formed between one side of the first insulation member 15 in the width direction of the first insulation member 15 and the side wall of the vent hole 114, or gaps may be formed between both sides of the first insulation member 15 in the width direction of the first insulation member 15 and the side wall of the vent hole 114.

There is a gap between the first insulation member 15 in the width direction of the first insulation member 15 and the side wall of the vent hole 114, allowing the gas to further flow from the gap to the vent hole 114 and then to the stimulus-response member 13. As a result, a smoother gas flow is provided.

It can be understood that a size of the gap between the first insulation member 15 in the width direction of the first insulation member 15 and the side wall of the vent hole 114 is not limited in the present disclosure and may be set as desired.

In an embodiment, referring to FIG. 3 to FIG. 5, the first insulation member 15 is attached to the surface of the first side 111 of the support 11. In this way, no gap is formed between the surface of the first side 111 of the support 11 and the first insulation member 15, i.e., no gap is formed between the first insulation member 15 and the support 11 in the thickness direction of the support 11. In this way, it is possible to prevent the first insulation member 15 from being formed into the cantilever structure, thereby preventing a movement of a cantilever part of the first insulation member 15 due to blowing of the gas from causing a flutter of the first insulation member 15, which would result in failure of a coverage effect of the first insulation member 15. In an exemplary embodiment, the first insulation member 15 is adhered and fixed to the surface of the first side 111 of the support 11. As a result, the need for other mounting and fixing structures are eliminated, resulting in convenient operation.

In an exemplary embodiment, referring to FIG. 3 and FIG. 8, a side wall of the vent hole 114 is connected to a grating 106 dividing the vent hole 114 into a plurality of air holes. The first insulation member 15 is attached to the grating 106.

In some embodiment, the grating 106 may be consisted of a plurality of strip-shaped structures and may be in a "Chinese character ten" shape or a "Chinese character mi" shape, and the present disclosure is not limited in this regard. A flared outer end of the strip structure of the grating 106 is fixed and connected to the side wall of the vent hole 114. The grating 106 and the support 11 may be integrally formed. For example, the grating 106 and the support 11 may be integrally formed though injection molding. The first insulation member 15 is attached to the grating 106. For example, the first insulation member 15 may be adhered and fixed to the grating 106. As a result, the first insulation member 15 has a stable structure that cannot be blown by the gas to flutter, thereby ensuring a stable blocking effect on the welding slag.

In other embodiments, the first insulation member 15 may be made of a material having a predetermined strength and rigidity. In this case, the first insulation member 15 may have a spacing distance from the surface of the first side 111 of the support 11 or from the grating 106.

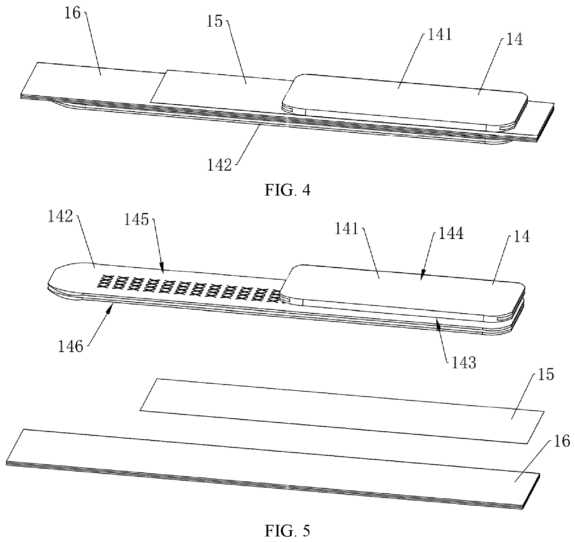

In an embodiment, referring to FIG. 4 and FIG. 5, the first connection portion 141 has a first surface 143 and a second surface 144 facing away from the first surface 143. The first surface 143 faces towards the second connection portion 142 after the first connection portion 141 and the second connection portion 142 are folded. The first insulation member 15 is attached to the first surface 143, and the second surface 144 is connected to the negative pole 12.

By providing the first insulation member 15 to attach to the first surface 143, a normal connection between the second surface 144 and the negative pole 12 is unaffected, thus ensuring a normal electrical connection between the second surface 144 and the negative pole 12. Most of the welding slag generated by welding the second surface 144 to the negative pole 12 is adhered and fixed by a surface of a side of the first insulation member 15 towards the negative pole 12, and no longer jumps for many times. In this way, falling of the welding slag into the vent hole 114 and entry of the welding slag into the stimulus-response member 13 are prevented from causing a short circuit. In addition, falling of the welding slag into the cell 20 is also prevented from causing a short circuit. In addition, the welding slag generated from the welding between the second connection portion 142 and the negative tab 22 is adhered and fixed by a surface of a side of the first insulation member 15 facing away from the negative pole 12 without jumping for many times, which prevents the welding slag from falling into the vent hole 114 and entering the stimulus-response member 13 and avoids the falling of the welding slag into the cell 20.

In an embodiment, referring to FIG. 3, FIG. 7, and FIG. 8, the energy storage apparatus 100 further includes a second insulation member 16 attached to the second connection portion 142. The vent hole 114 is partially covered with the second insulation member 16 in the thickness direction of the support 11.

In some embodiment, the second insulation member 16 and the first insulation member 15 may be made of the same material or different materials. The second insulation member 16 may be bonded and fixed to the second connection portion 142, which can refer to a connection manner between the first insulation member 15 and the first connection portion 141. The second insulation member 16 may be a single-layer separator or a multi-layer separator formed by folding, and the present disclosure is not limited in this regard.

The assembly of the energy storage apparatus 100 is achieved by folding the first connection portion 141 and the second connection portion 142. After the first connection portion 141 and the second connection portion 142 are folded, the first insulation member 15 is closer to the vent hole 114 than the second insulation member 16 in the thickness direction of the support 11. The first insulation member 15 partially covers the vent hole 114 in the thickness direction of the support 11, thereby playing a role in blocking the welding slag. On this basis, by providing the second insulation member 16 to cover the vent hole 114 at least partially 114 in the thickness direction of the support 11, the blocking effect on the welding slag is further enhanced, which further improves the safety of the energy storage apparatus 100 and lowers safety hazards.

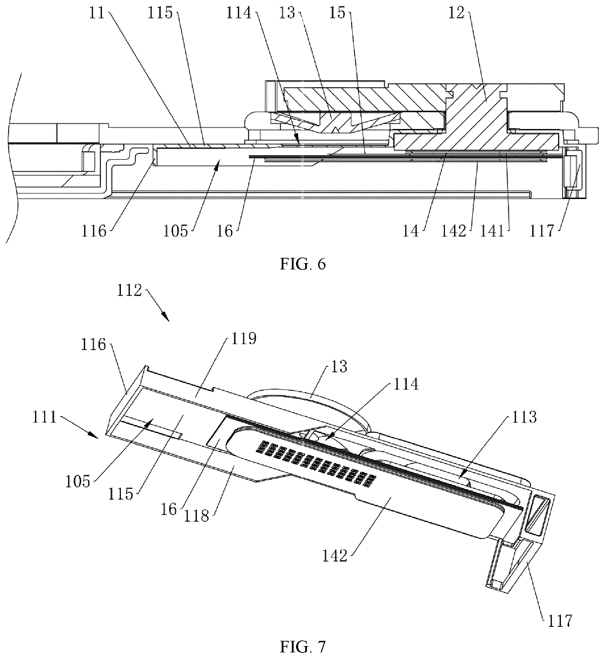

In an exemplary embodiment, referring to FIG. 6 and FIG. 7, the second insulation member 16 is the same as the first insulation member 15 and partially covers the vent hole 114 in the thickness direction of the support 11. Reference may be made to various embodiments described above regarding relationships between the first insulation member 15 and each of the first end portion 101 to the fourth end portion 104, which is not repeated herein. In this embodiment, the second insulation member 16 may be spaced apart from or be attached to the first insulation member 15. When a length of the second insulation member 16 is longer than that of the first insulation member 15, a part of the second insulation member 16 beyond the first insulation member 15 may also be attached and fixed to the surface of the first side 111 of the support 11 and the grating 106.

In an exemplary embodiment, the second insulation member 16 is substantially the same as the first insulation member 15. In the thickness direction of the support 11, a ratio of an area of a part of the vent hole 114 uncovered with the second insulation member 16 to an area of a part of the vent hole 114 covered with the second insulation member 16 ranges from 1/10 to 1/2 In some embodiment, this ratio may be 1/10, 1/9, 1/8, 1/7, 1/6, 1/5, 1/4, 1/3, 1/2, and the like. By setting this proportional range, the vent hole 114 and the second insulation member 16 are allowed to be reasonable in size, allowing for the harmonious structural proportion of the energy storage apparatus 100. Meanwhile, it is ensured that the second insulation member 16 has a great size to act as the barrier against welding slag. Meanwhile, it can be ensured that the gas can pass through the vent hole 114 and reach beneath the stimulus-response member 13.

Alternatively, the second insulation member 16 is different from the first insulation member 15. The vent holes 114 is completely covered with the second insulation member 16 in the thickness direction of the support 11. A spacing is formed between the second insulation member 16 and the support 11 in the thickness direction of the support 11. In this way, the blocking effect on the welding slag is good, and the gas can flow through the gap between the second insulation member 16 and the support 11 in the thickness direction of the support 11 to the gap between the side wall of the vent hole 114 and the first insulation member 15 to enter the vent hole 114, and flow to the position beneath the stimulus-response member 13.

In an exemplary embodiment, in an embodiment where both the first insulation member 15 and the second insulation member 16 at provided concurrently, an area of the vent hole 114 covered with the second insulation member 16 can be greater than an area of the vent hole 114 covered with the first insulation member 15.

In an exemplary embodiment, referring to FIG. 2, FIG. 3, and FIG. 5, the second connection portion 142 has a third surface 145. The third surface 145 faces towards the first connection portion 141 after the first connection portion 141 and the second connection portion 142 are folded, and the second insulation member 16 is attached to the third surface 145.

In an exemplary embodiment, the second connection portion 142 is a single-layer structure and has a fourth surface 146 facing away from the third surface 145. The fourth surface 146 is connected and fixed to the negative tab 22.

In an exemplary embodiment, referring to FIG. 2, FIG. 3, and FIG. 5, the second connection portion 142 is of a multi-layer structure, and the negative tab 22 reaches between the multi-layer structures of the second connection portion 142 to achieve connection and fixation.

The second insulation member 16 is attached to the third surface 145, which does not affect a normal connection between the second connection portion 142 and the negative tab 22, thereby ensuring a normal electrical connection between the second connection portion 142 and the negative tab 22. The welding slag generated by welding the second connection portion 142 to the negative tab 22 is adhered and fixed by a surface of a side of the second insulation member 16 facing towards the cell 20 without jumping repeatedly, which avoids the short circuit caused by the falling of the welding slag into the vent hole 114 and further into the stimulus-response member 13. A part, which is not adhered and fixed by the first insulation member 15, of the welding slag generated by welding the first connection portion 141 to the negative pole 12 falls onto a surface of the second insulation member 16 facing away from the cell 20 to be adhered and fixed, thereby preventing the welding slag from falling into the vent hole 114 and entering the stimulus-response member 13, and also preventing the welding slag from falling into the cell 20.

In an exemplary embodiment, referring to FIG. 3 to FIG. 5, the first insulation member 15 has a first visual recognition feature, and the second insulation member 16 has a second visual recognition feature different from the first visual recognition feature.

In some embodiment, the first visual recognition feature and the second visual recognition feature are features that can be recognized by user's naked eyes, which for example may be a color, a pattern, or a shape. For example, when the first insulation member 15 is a blue film, the first visual recognition feature thereof is blue. When the second insulation member 16 is a green film, the second visual recognition feature thereof is green. Other types of visual identification features will not be described herein, as long as they can be easily recognized by the user's naked eyes without barriers.

By providing the first insulation member 15 with the first visual recognition feature and the second insulation member 16 with the second visual recognition feature different from the first visual recognition feature, it is convenient to quickly and accurately identify whether a layer of protection structure is missing. That is, it is possible to identify whether the first insulation member 15 and the second insulation member 16 are provided simultaneously, thereby ensuring the blocking effect on the welding slag.

In an embodiment, referring to FIG. 6 and FIG. 7, the support 11 includes a substrate 115, a first stopper 116, and a second stopper 117. The first stopper 116 and the second stopper 117 are arranged at one surface of the substrate 115 and are opposite to each other in a length direction of the substrate 115. The substrate 115, the first stopper 116, and the second stopper 117 form an accommodation groove 105 together. The mounting hole 113 and the vent hole 114 are both defined at the substrate 115. The first insulation member 15 and the second insulation member 16 are both accommodated in the accommodation groove 105 after the first connection portion 141 and the second connection portion 142 are folded. The first stopper 116 and the second stopper 117 are configured to limit movements of the first insulation member 15 and the second insulation member 16 in the length direction of the support 11.

In some embodiment, the substrate 115 may be in a plate-like shape with a rectangular surface. A length direction, a width direction, and a thickness direction of the substrate 115 are the length direction, the width direction, and the thickness direction of the support 11, respectively. The first stopper 116 and the second stopper 117 may be in a plate-like shape, a strip-like shape, a block-like shaped, or the like, and the present disclosure is not limited in this regard. The first stopper 116, the second stopper 117, and the substrate 115 may be integrally formed through the injection molding, for example.

In an exemplary embodiment, the first stopper 116 and the second stopper 117 are respectively arranged at two ends in the length direction of the substrate 115. The first stopper 116 is located between the mounting hole 113 and the vent hole 114, and the second stopper 117 is located at a side of the mounting hole 113 facing away from the vent hole 114.

By providing the first stopper 116 and the second stopper 117, and by forming accommodation groove 105 by the first stopper 116, the second stopper 117, and the substrate 115 together, the first insulation member 15 and the second insulation member 16 can be accommodated in the accommodation groove 105, thereby limiting the first insulation member 15 and the second insulation member 16 in the length direction of the substrate 115. In this way, it is possible to prevent movements of the first insulation member 15 and/or the second insulation member 16 in the length direction of the substrate 115 from completely covering the vent hole 114, which would cause the gas not to enter the stimulus-response member 13 through the vent hole 114, resulting in a loss of the overcharge protection function. It is also possible to avoid other problems caused by a normal flowing of the gas due to movements of the first insulation member 15 and/or the second insulation member 16 in the length direction of the substrate 115 to other positions, such as a problem that the explosion-proof valve 191 cannot be started.

Further, referring to FIG. 6 and FIG. 7, the support 11 further includes a third stopper 118 and a fourth stopper 119. The third stopper 118 and the fourth stopper 119 are arranged at a surface of the substrate 115 at which the first stopper 116 is located. The third stopper 118 and the fourth stopper 119 are opposite to each other in a width direction of the substrate 115. The accommodation groove 105 is surrounded by the third stopper 118 and the fourth stopper 119. The third stopper 118 and the fourth stopper 119 are configured to limit movements of the first insulation member 15 and the second insulation member 16 in a width direction of the support 11.

In some embodiment, the third stopper 118 and the fourth stopper 119 are similar to the first stopper 116 and the second stopper 117 as described above, and reference may be made to the above descriptions. The third stopper 118 and the fourth stopper 119 may extend in the length direction of the substrate 115. An end of each of the third stopper 118 and the fourth stopper 119 is connected to the first stopper 116, and another end of each of the third stopper 118 and the fourth stopper 119 may be connected to or not connected to the second stopper 117. The third stopper 118, the fourth stopper 119, and the substrate 115 may also be integrally formed.

By providing the third stopper 118 and the fourth stopper 119, the first insulation member 15 and the second insulation member 16 are limited in the width direction of the substrate 115, avoiding the abnormal flowing of the gas due to the movements of the first insulation member 15 and/or the second insulation member 16 in the width direction of the substrate 115. The specific types of the gas flowing abnormality are not limited and may be referred to the previous explanation for the first stopper 116 and the second stopper 117.

Based on the energy storage apparatus 100 according to the embodiments of the present disclosure, embodiments of the present disclosure also provide an electric device. The electric device includes the energy storage apparatus 100 in the embodiments of the present disclosure. The energy storage apparatus 100 is configured to supply electric energy to the electric device.

The electric device may be an electric vehicle, a battery swapping station, or the like, and the present disclosure is not limited in this regard.

By employing the energy storage apparatus 100 according to the embodiments of the present disclosure, it is possible to reduce the safety hazards due to the short circuit, thereby enhancing the safety.

In the description of the embodiments of the present disclosure, it should be understood that, terms such as "center," "over," "below," "left," "right," "vertical," "horizontal," "inner," "outer," etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation on the present disclosure.

The above embodiments are only preferred embodiments of the present disclosure and certainly are not intended to limit the scope of the present disclosure. Those skilled in the art can understand that all or part of the processes for implementing the embodiments described above, and changes made according to the claims of the present disclosure are still within the scope covered by the present disclosure.

## Claims

1. An energy storage apparatus (100), comprising:
a support (11) having a first side (111) and a second side (112) facing away from the first side (111), the support (11) having a mounting hole (113) and a vent hole (114), the mounting hole (113) and the vent hole (114) being spaced apart from each other in a length direction of the support (11);
a pole accommodated in the mounting hole (113);
a stimulus-response member (13) arranged at the second side (112), a gas from the first side (111) flowing to the stimulus-response member (13) through the vent hole (114);
a connector located at the first side (111), the connector comprising a first connection portion (141) and a second connection portion (142) connected to the first connection portion (141), the first connection portion (141) facing towards the second connection portion (142) after the first connection portion (141) and the second connection portion (142) being folded relative to each other, the first connection portion (141) being connected to the pole, and the second connection portion (142) being configured to be connected to a tab of the energy storage apparatus (100); and
a first insulation member (15) attached to the first connection portion (141) and extending towards the vent hole (114), the vent hole (114) being partially covered with the first insulation member (15) in a thickness direction of the support (11).

2. The energy storage apparatus (100) according to claim 1, wherein in the thickness direction of the support (11), a ratio of an area of a part of the vent hole (114) uncovered with the first insulation member (15) to an area of a part of the vent hole (114) covered with the first insulation member (15) ranges from 1/10 to 1/2.

3. The energy storage apparatus (100) according to claim 2, wherein a side wall of the vent hole (114) comprises a first end portion (101) and a second end portion (102) opposite to the first end portion (101) in the length direction of the support (11),
wherein the first end portion (101) is close to the mounting hole (113) and covered with the first insulation member (15) in the thickness direction of the support (11), and wherein the second end portion (102) is uncovered with the first insulation member (15) in the thickness direction of the support (11).

4. The energy storage apparatus (100) according to claim 2, wherein a side wall of the vent hole (114) comprises a third end portion (103) and a fourth end portion (104) opposite to the third end portion (103) in a width direction of the support (11),
wherein the third end portion (103) is covered with the first insulation member (15) in the thickness direction of the support (11) and the fourth end portion (104) is uncovered with the first insulation member (15) in the thickness direction of the support (11); or both the third end portion (103) and the fourth end portion (104) are uncovered with the first insulation member (15) in the thickness direction of the support (11).

5. The energy storage apparatus (100) according to claim 1, wherein a side wall of the vent hole (114) is connected to a grating (106) dividing the vent hole (114) into a plurality of air holes, the first insulation member (15) being attached to the grating (106).

6. The energy storage apparatus (100) according to claim 1, wherein the first connection portion (141) has a first surface (143) and a second surface (144) facing away from the first surface (143), the first surface (143) facing towards the second connection portion (142) after the first connection portion (141) and the second connection portion (142) being folded, the first insulation member (15) being attached to the first surface (143), and the second surface (144) being connected to the pole.

7. The energy storage apparatus (100) according to any one of claims 1 to 6, further comprising a second insulation member (16) attached to the second connection portion (142), the vent hole (114) being at least partially covered with the second insulation member (16) in the thickness direction of the support (11).

8. The energy storage apparatus (100) according to claim 7, wherein the second connection portion (142) has a third surface (145), the third surface (145) facing towards the first connection portion (141) after the first connection portion (141) and the second connection portion (142) being folded, and the second insulation member (16) being attached to the third surface (145).

9. The energy storage apparatus (100) according to claim 7, wherein the support (11) comprises a substrate (115), a first stopper (116), and a second stopper (117), wherein:
the first stopper (116) and the second stopper (117) are arranged at one surface of the substrate (115) and are opposite to each other in a length direction of the substrate (115);
the substrate (115), the first stopper (116), and the second stopper (117) form an accommodation groove (105) together;
both the mounting hole (113) and the vent hole (114) are defined at the substrate (115);
both the first insulation member (15) and the second insulation member (16) are accommodated in the accommodation groove (105) after the first connection portion (141) and the second connection portion (142) are folded; and
the first stopper (116) and the second stopper (117) are configured to limit movements of the first insulation member (15) and the second insulation member (16) in the length direction of the support (11).

10. The energy storage apparatus (100) according to claim 9, wherein the support (11) further comprises a third stopper (118) and a fourth stopper (119) that are arranged at a surface of the substrate (115) at which the first stopper (116) is located, wherein:
the third stopper (118) and the fourth stopper (119) are opposite to each other in a width direction of the substrate (115);
the accommodation groove (105) is surrounded by the third stopper (118) and the fourth stopper (119); and
the third stopper (118) and the fourth stopper (119) are configured to limit movements of the first insulation member (15) and the second insulation member (16) in a width direction of the support (11).

11. The energy storage apparatus (100) according to claim 7, wherein:
in the thickness direction of the support (11), a ratio of an area of a part of the vent hole (114) uncovered with the second insulation member (16) to an area of a part of the vent hole (114) covered with the second insulation member (16) ranges from 1/10 to 1/2; or
in the thickness direction of the support (11), the vent hole (114) is completely covered with the second insulation member (16) and a spacing is formed between the second insulation member (16) and the support (11) in the thickness direction of the support (11).

12. The energy storage apparatus (100) according to claim 7, wherein:
the first insulation member (15) has a first visual recognition feature; and
the second insulation member (16) has a second visual recognition feature different from the first visual recognition feature.

13. An electric device, comprising the energy storage apparatus (100) according to any one of claims 1 to 12, wherein the energy storage apparatus (100) is configured to supply electric energy to the electric device.

## Patentansprüche

1. Energiespeichervorrichtung (100), umfassend:
einen Träger (11) mit einer ersten Seite (111) und einer zweiten Seite (112), die von der ersten Seite (111) abgewandt ist, wobei der Träger (11) eine Montageöffnung (113) und eine Entlüftungsöffnung (114) aufweist, wobei die Montageöffnung (113) und die Entlüftungsöffnung (114) voneinander in einer Längsrichtung des Trägers (11) beabstandet sind;
einen Pol, der in der Montageöffnung (113) aufgenommen ist;
ein Reiz-Reaktions-Element (13), das an der zweiten Seite (112) angeordnet ist, wobei ein Gas von der ersten Seite (111) durch die Entlüftungsöffnung (114) zum Reiz-Reaktions-Element (13) strömt;
einen Verbinder, der an der ersten Seite (111) angeordnet ist, wobei der Verbinder einen ersten Verbindungsabschnitt (141) und einen zweiten Verbindungsabschnitt (142) umfasst, der mit dem ersten Verbindungsabschnitt (141) verbunden ist, wobei der erste Verbindungsabschnitt (141) nach einem relativen Umfalten des ersten und des zweiten Verbindungsabschnitts (141, 142) dem zweiten Verbindungsabschnitt (142) zugewandt ist, wobei der erste Verbindungsabschnitt (141) mit der Stange verbunden ist und der zweite Verbindungsabschnitt (142) dazu konfiguriert ist, mit einer Polfahne der Energiespeichervorrichtung (100) verbunden zu werden; und
ein erstes Isolationselement (15), das an dem ersten Verbindungsabschnitt (141) angebracht ist und sich zur Entlüftungsöffnung (114) hin erstreckt, wobei die Entlüftungsöffnung (114) durch das erste Isolationselement (15) in einer Dickenrichtung des Trägers (11) teilweise abgedeckt ist.

2. Energiespeichervorrichtung (100) nach Anspruch 1, wobei in der Dickenrichtung des Trägers (11) ein Verhältnis einer Fläche eines Teils der Entlüftungsöffnung (114), der nicht mit dem ersten Isolationselement (15) bedeckt ist, zu einer Fläche eines Teils der Entlüftungsöffnung (114), der mit dem ersten Isolationselement (15) bedeckt ist, im Bereich von 1/10 bis 1/2 liegt.

3. Energiespeichervorrichtung (100) nach Anspruch 2, wobei eine Seitenwand der Entlüftungsöffnung (114) einen ersten Endabschnitt (101) und einen zweiten Endabschnitt (102) aufweist, der dem ersten Endabschnitt (101) in der Längsrichtung des Trägers (11) gegenüberliegt,
wobei der erste Endabschnitt (101) nahe der Montageöffnung (113) liegt und in der Dickenrichtung des Trägers (11) mit dem ersten Isolationselement (15) abgedeckt ist, und wobei der zweite Endabschnitt (102) in der Dickenrichtung des Trägers (11) nicht mit dem ersten Isolationselement (15) abgedeckt ist.

4. Energiespeichervorrichtung (100) nach Anspruch 2, wobei eine Seitenwand der Entlüftungsöffnung (114) einen dritten Endabschnitt (103) und einen vierten Endabschnitt (104) aufweist, der dem dritten Endabschnitt (103) in einer Breitenrichtung des Trägers (11) gegenüberliegt,
wobei der dritte Endabschnitt (103) in der Dickenrichtung des Trägers (11) mit dem ersten Isolationselement (15) abgedeckt ist und der vierte Endabschnitt (104) in der Dickenrichtung des Trägers (11) nicht mit dem ersten Isolationselement (15) abgedeckt ist; oder wobei sowohl der dritte Endabschnitt (103) als auch der vierte Endabschnitt (104) in der Dickenrichtung des Trägers (11) nicht mit dem ersten Isolationselement (15) abgedeckt sind.

5. Energiespeichervorrichtung (100) nach Anspruch 1, wobei eine Seitenwand der Entlüftungsöffnung (114) mit einem Gitter (106) verbunden ist, das die Entlüftungsöffnung (114) in mehrere Luftöffnungen unterteilt, wobei das erste Isolationselement (15) an dem Gitter (106) angebracht ist.

6. Energiespeichervorrichtung (100) nach Anspruch 1, wobei der erste Verbindungsabschnitt (141) eine erste Oberfläche (143) und eine zweite Oberfläche (144) aufweist, die von der ersten Oberfläche (143) abgewandt ist, wobei die erste Oberfläche (143) nach dem Umfalten des ersten Verbindungsabschnitts (141) und des zweiten Verbindungsabschnitts (142) dem zweiten Verbindungsabschnitt (142) zugewandt ist, wobei das erste Isolationselement (15) an der ersten Oberfläche (143) angebracht ist und die zweite Oberfläche (144) mit der Stange verbunden ist.

7. Energiespeichervorrichtung (100) nach einem der Ansprüche 1 bis 6, ferner umfassend ein zweites Isolationselement (16), das an dem zweiten Verbindungsabschnitt (142) angebracht ist, wobei die Entlüftungsöffnung (114) durch das zweite Isolationselement (16) in der Dickenrichtung des Trägers (11) zumindest teilweise abgedeckt ist.

8. Energiespeichervorrichtung (100) nach Anspruch 7, wobei der zweite Verbindungsabschnitt (142) eine dritte Oberfläche (145) aufweist, wobei die dritte Oberfläche (145) nach dem Umfalten des ersten Verbindungsabschnitts (141) und des zweiten Verbindungsabschnitts (142) dem ersten Verbindungsabschnitt (141) zugewandt ist und das zweite Isolationselement (16) an der dritten Oberfläche (145) angebracht ist.

9. Energiespeichervorrichtung (100) nach Anspruch 7, wobei der Träger (11) ein Substrat (115), einen ersten Anschlag (116) und einen zweiten Anschlag (117) aufweist,
wobei der erste Anschlag (116) und der zweite Anschlag (117) auf einer Oberfläche des Substrats (115) angeordnet sind und einander in einer Längsrichtung des Substrats (115) gegenüberliegen;
wobei das Substrat (115), der erste Anschlag (116) und der zweite Anschlag (117) gemeinsam eine Aufnahmenut (105) bilden;
wobei sowohl die Montageöffnung (113) als auch die Entlüftungsöffnung (114) in dem Substrat (115) ausgebildet sind;
wobei sowohl das erste Isolationselement (15) als auch das zweite Isolationselement (16) in der Aufnahmenut (105) aufgenommen werden, nachdem der erste Verbindungsabschnitt (141) und der zweite Verbindungsabschnitt (142) gefaltet worden sind;
wobei der erste Anschlag (116) und der zweite Anschlag (117) dazu konfiguriert sind, Bewegungen des ersten Isolationselements (15) und des zweiten Isolationselements (16) in der Längsrichtung des Trägers (11) zu begrenzen.

10. Energiespeichervorrichtung (100) nach Anspruch 9, wobei der Träger (11) ferner einen dritten Anschlag (118) und einen vierten Anschlag (119) umfasst, die an einer Oberfläche des Substrats (115) angeordnet sind, an welcher der erste Anschlag (116) angeordnet ist, wobei:
der dritte Anschlag (118) und der vierte Anschlag (119) einander in Breitenrichtung des Substrats (115) gegenüberliegen;
die Aufnahmenut (105) von dem dritten Anschlag (118) und dem vierten Anschlag (119) umgeben ist; und
der dritte Anschlag (118) und der vierte Anschlag (119) dazu konfiguriert sind, Bewegungen des ersten Isolationselementes (15) und des zweiten Isolationselementes (16) in einer Breitenrichtung des Trägers (11) zu begrenzen.

11. Energiespeichervorrichtung (100) nach Anspruch 7, wobei
in der Dickenrichtung des Trägers (11) ein Verhältnis einer Fläche eines Teils der Entlüftungsöffnung (114), der nicht mit dem zweiten Isolationselement (16) bedeckt ist, zu einer Fläche eines Teils der Entlüftungsöffnung (114), der mit dem zweiten Isolationselement (16) bedeckt ist, im Bereich von 1/10 bis 1/2 liegt; oder
wobei in der Dickenrichtung des Trägers (11) die Entlüftungsöffnung (114) vollständig mit dem zweiten Isolationselement (16) bedeckt ist, und wobei in der Dickenrichtung des Trägers (11) ein Abstand zwischen dem zweiten Isolationselement (16) und dem Träger (11) ausgebildet ist.

12. Energiespeichervorrichtung (100) nach Anspruch 7, wobei
das erste Isolationselement (15) ein erstes visuelles Erkennungsmerkmal aufweist; und
das zweite Isolationselement (16) ein zweites visuelles Erkennungsmerkmal aufweist, das sich von dem ersten visuellen Erkennungsmerkmal unterscheidet.

13. Elektrische Vorrichtung, die die Energiespeichervorrichtung (100) nach einem der Ansprüche 1 bis 12 umfasst, wobei die Energiespeichervorrichtung (100) dazu konfiguriert ist, die elektrische Vorrichtung mit elektrischer Energie zu versorgen.

## Revendications

1. Appareil de stockage d'énergie (100), comprenant :
un support (11) ayant un premier côté (111) et un deuxième côté (112) tourné à l'opposé du premier côté (111), le support (11) ayant un trou de montage (113) et un trou de ventilation (114), le trou de montage (113) et le trou de ventilation (114) étant espacés l'un de l'autre dans la direction de la longueur du support (11) ;
un pôle logé dans le trou de montage (113) ;
un élément de réponse aux stimuli (13) agencé au deuxième côté (112), un gaz provenant du premier côté (111) s'écoulant vers l'élément de réponse aux stimuli (13) à travers le trou de ventilation (114) ;
un connecteur situé au premier côté (111), le connecteur comprenant une première partie de connexion (141) et une deuxième partie de connexion (142) connectée à la première partie de connexion (141), la première partie de connexion (141) étant tournée vers la deuxième partie de connexion (142) après que la première partie de connexion (141) et la deuxième partie de connexion (142) ont été pliées l'une par rapport à l'autre, la première partie de connexion (141) étant connectée au pôle, et la deuxième partie de connexion (142) étant configurée pour être connectée à une languette de l'appareil de stockage d'énergie (100) ; et
un premier élément isolant (15) fixé à la première partie de connexion (141) et s'étendant vers le trou de ventilation (114), le trou de ventilation (114) étant partiellement couvert par le premier élément isolant (15) dans la direction de l'épaisseur du support (11).

2. L'appareil de stockage d'énergie (100) selon la revendication 1, dans lequel, dans la direction de l'épaisseur du support (11), le rapport de la surface de la partie du trou de ventilation (114) non couverte par le premier élément isolant (15) à la surface de la partie du trou de ventilation (114) couverte par le premier élément isolant (15) est compris entre 1/10 et 1/2.

3. L'appareil de stockage d'énergie (100) selon la revendication 2, dans lequel une paroi latérale du trou de ventilation (114) comprend une première portion d'extrémité (101) et une deuxième portion d'extrémité (102) opposée à la première portion d'extrémité (101) dans la direction de la longueur du support (11),
dans lequel la première portion d'extrémité (101) est proche du trou de montage (113) et couverte par le premier élément isolant (15) dans la direction de l'épaisseur du support (11), et dans lequel la deuxième portion d'extrémité (102) n'est pas couverte par le premier élément isolant (15) dans la direction de l'épaisseur du support (11).

4. L'appareil de stockage d'énergie (100) selon la revendication 2, dans lequel une paroi latérale du trou de ventilation (114) comprend une troisième portion d'extrémité (103) et une quatrième portion d'extrémité (104) opposée à la troisième portion d'extrémité (103) dans la direction de la largeur du support (11),
dans lequel la troisième portion d'extrémité (103) est couverte par le premier élément isolant (15) dans la direction de l'épaisseur du support (11) et la quatrième portion d'extrémité (104) n'est pas couverte par le premier élément isolant (15) dans la direction de l'épaisseur du support (11) ; ou bien la troisième portion d'extrémité (103) et la quatrième portion d'extrémité (104) sont toutes deux non couvertes par le premier élément isolant (15) dans la direction de l'épaisseur du support (11).

5. L'appareil de stockage d'énergie (100) selon la revendication 1, dans lequel une paroi latérale du trou de ventilation (114) est connectée à une grille (106) divisant le trou de ventilation (114) en une pluralité de trous d'air, le premier élément isolant (15) étant fixé à la grille (106).

6. L'appareil de stockage d'énergie (100) selon la revendication 1, dans lequel la première partie de connexion (141) a une première surface (143) et une seconde surface (144) tournée à l'opposé de la première surface (143), la première surface (143) étant tournée vers la deuxième partie de connexion (142) après que la première partie de connexion (141) et la deuxième partie de connexion (142) ont été pliées, le premier élément isolant (15) étant fixé à la première surface (143), et la seconde surface (144) étant connectée au pôle.

7. L'appareil de stockage d'énergie (100) selon l'une quelconque des revendications 1 à 6, comprenant en outre un deuxième élément isolant (16) fixé à la deuxième partie de connexion (142), le trou de ventilation (114) étant au moins partiellement couvert par le deuxième élément isolant (16) dans la direction de l'épaisseur du support (11).

8. L'appareil de stockage d'énergie (100) selon la revendication 7, dans lequel la deuxième partie de connexion (142) a une troisième surface (145), la troisième surface (145) étant tournée vers la première partie de connexion (141) après que la première partie de connexion (141) et la deuxième partie de connexion (142) ont été pliées, et le deuxième élément isolant (16) étant fixé à la troisième surface (145).

9. L'appareil de stockage d'énergie (100) selon la revendication 7, dans lequel le support (11) comprend un substrat (115), une première butée (116) et une deuxième butée (117), où :
le première butée (116) et le deuxième butée (117) sont agencés sur une surface du substrat (115) et sont opposés l'un à l'autre dans la direction de la longueur du substrat (115) ;
le substrat (115), la première butée (116) et la deuxième butée (117) forment ensemble une rainure de réception (105) ;
le trou de montage (113) et le trou de ventilation (114) sont tous deux définis au niveau du substrat (115) ;
le premier élément isolant (15) et le deuxième élément isolant (16) sont tous deux logés dans la rainure de réception (105) après que la première partie de connexion (141) et la deuxième partie de connexion (142) ont été pliées ; et
la première butée (116) et la deuxième butée (117) sont configurés pour limiter les mouvements du premier élément isolant (15) et du deuxième élément isolant (16) dans la direction de la longueur du support (11).

10. L'appareil de stockage d'énergie (100) selon la revendication 9, dans lequel le support (11) comprend en outre une troisième butée (118) et une quatrième butée (119) qui sont agencés sur la surface du substrat (115) sur laquelle se trouve la première butée (116), où :
la troisième butée (118) et la quatrième butée (119) sont opposés l'un à l'autre dans la direction de la largeur du substrat (115) ;
la rainure de réception (105) est entourée par la troisième butée (118) et la quatrième butée (119) ; et
la troisième butée (118) et la quatrième butée (119) sont configurés pour limiter les mouvements du premier élément isolant (15) et du deuxième élément isolant (16) dans la direction de la largeur du support (11).

11. L'appareil de stockage d'énergie (100) selon la revendication 7, dans lequel :
dans la direction de l'épaisseur du support (11), le rapport de la surface de la partie du trou de ventilation (114) non couverte par le deuxième élément isolant (16) à la surface de la partie du trou de ventilation (114) couverte par le deuxième élément isolant (16) est compris entre 1/10 et 1/2 ; ou
dans la direction de l'épaisseur du support (11), le trou de ventilation (114) est complètement couvert par le deuxième élément isolant (16) et un espacement est formé entre le deuxième élément isolant (16) et le support (11) dans la direction de l'épaisseur du support (11).

12. L'appareil de stockage d'énergie (100) selon la revendication 7, dans lequel :
le premier élément isolant (15) a une première caractéristique de reconnaissance visuelle ; et
le deuxième élément isolant (16) a une deuxième caractéristique de reconnaissance visuelle différente de la première caractéristique de reconnaissance visuelle.

13. Un dispositif électrique, comprenant l'appareil de stockage d'énergie (100) selon l'une quelconque des revendications 1 à 12, dans lequel l'appareil de stockage d'énergie (100) est configuré pour fournir de l'énergie électrique au dispositif électrique.
